# EUROPÄISCHE PATENTSCHRIFT

(11) **EP 0 672 839 B1**
(45) Veröffentlichungstag und Bekanntmachung des Hinweises auf die Patenterteilung: **26.02.1997**
(21) Anmeldenummer: 94119709.7
(22) Anmeldetag: 14.12.1994
(51) Int. Cl.: F16C 32/06

(54) **Verfahren zum Herstellen von Mikrodüsen eines aerostatischen Lagers**
Manufacturing method of micro-nozzles of an aerostatic bearing
Procédé de fabrication de micro-gicleurs pour un palier aérostatique

(30) Priorität: 03.02.1994 DE 4403340
(43) Veröffentlichungstag der Anmeldung: 20.09.1995
(73) Patentinhaber: Heinzl, Joachim, Prof. Dr.-Ing., D-81549 München (DE)
(72) Erfinder: Heinzl, Joachim, Prof. Dr.-Ing., D-81549 München (DE); Muth, Michael, Dipl.-Ing., D-81737 München (DE); Schulz, Bernd, Dipl.-Ing., D-81547 München (DE)

(56) Entgegenhaltungen:
- EP-A- 0 237 627
- DE-C- 3 439 648
- GB-A- 1 263 054
- US-A- 3 169 807
- US-A- 3 645 589

## Beschreibung

Die Erfindung betrifft ein Verfahren zum Herstellen von Mikrodüsen eines aerostatischen Lagers.

Aerostatische Lager mit flächig verteilten Mikrodüsen zeichnen sich durch eine hohe Tragkraft und Steifigkeit, durch ein gutes Dämpfungsverhalten und damit einen großen Stabilitätsbereich sowie durch einen rauscharmen Betrieb aus. Die statischen Eigenschaften lassen sich durch die flächige Verteilung der auf einen vorgegebenen Strömungswiderstand abgeglichenen Mikrodüsen erreichen, die zu einem gleichmäßig hohen Druck im Lagerspalt führt. Gute dynamische Eigenschaften ergeben sich, wenn es gelingt, die engste Drosselstelle der Mikrodüsen unmittelbar an der Austrittsstelle in den Lagerspalt zu legen. Ein rauscharmer Betrieb resultiert aus der kapillaren Wirkung der Drosselstellen.

Bisher werden solche Lager nach DE-C-34 39 648 dadurch erzeugt, daß Sintermaterial, z.B. Sinterbronze, als Lagermaterial für mindestens eine der beiden Lagerflächen eingesetzt wird und als Lagerfläche eine Fläche des Sintermaterials verwendet wird, an der sich beim Schütten eine an die dichteste Kugelpackung angenäherte Anordnung der Sinterkugeln ergibt. Diese Flächen werden dann durch Walzen verdichtet, wobei die Walzgeometrie so gewählt wird, daß nur die obersten Kugelschichten plastisch verformt werden. Durch das Rückfedern entstehen dabei zwischen je drei Kugeln der obersten Kugelschicht enge Restspalte. Durch Abtragen der oberen Hälfte der obersten Kugelschicht, z.B. durch Diamantieren, gelingt es, diese Restspalte unmittelbar an der Lageroberfläche als Drosselstellen wirksam werden zu lassen. Allerdings ist der Prozeß sehr schwer zu beherrschen, insbesondere wenn man bestimmte Strömungswiderstände der Drosselschicht einstellen möchte und eine gleichmäßige Verteilung der Drosselstellen über die Lagerfläche anstrebt.

Nach der US-A-5 110 520 werden flächig verteilte Mikrodüsen dadurch erzeugt, daß die gesinterte poröse Lagerfläche mit Kunststoffspray zunächst verschlossen wird und anschließend durch gezieltes Anlösen an einzelnen Stellen wieder geöffnet wird.

Nach der DE-C-32 30 232 wird eine gesinterte Lagerfläche ebenfalls verdichtet und anschließend durch Ätzen soweit geöffnet, daß die gewünschte Drosselwirkung erzielt wird.

Ein weiteres aerostatisches Lager ist in der DE-C-31 10 712 beschrieben. Um die Steifigkeit zu erhöhen, sind außer den lagerspaltseitigen Drosselstellen auch einspeisungsseitige Drosselstellen vorgesehen. Zwischen dem Lagerspalt und der Einspeisungsseite ist ein poröser Werkstoff angeordnet.

Ein aerostatisches Lager von dem diese Erfindung ausgeht, ist in der EP-A-0 237 627 angegeben. Die Mikrodüsen des Lagers sind in die verdichtete oder beschichtete Lagerfläche eines porösen Sintermaterials mittels eines Laserstrahls eingebracht.

Weitere aerostatische Lager sind in der US-A-3,645,589, US-A-3,169,807 sowie der GB-A-1 263 054 beschrieben.

In der FR-A-2 324 425 und der JP-A-03-291188 sind Maßnahmen zur Bearbeitung eines Werkstückes mit einem Laser angegeben. Die Bearbeitung eines Lagers ist nicht erwähnt.

Aufgabe der Erfindung ist es, Nachteile bekannter Lager zu beheben und mit besonders einfachen Mitteln und Verfahren die Lagereigenschaften weiter zu optimieren.

Diese Aufgabe wird durch das Verfahren gemäß den Merkmalen des Anspruches 1 gelöst.

Vorteilhafte Ausgestaltungen sind in den Unteransprüchen angegeben.

Die Vorteile der Erfindung liegen vor allem darin, daß durch die Steuerung des Laserstrahls beim Einbringen des Loches sich einfach beliebige Strömungswiderstände in der Lagerschicht einstellen lassen. Weiterhin kann das Verdichten der Lagerflächen durch Walzen dazu benutzt werden, die Lageroberfläche auf die gewünschte Form- und Oberflächentoleranz zu bearbeiten, ohne zugleich auf den strömungswiderstand achten zu müssen.

Es lassen sich auch ungleichförmige Verteilungen der Mikrodüsen in der Lagerfläche erzeugen, um das Lager an spezielle Belastungen anzupassen.

Die vorgeschlagenen Verfahren sind so einfach, daß eine automatisierte Serienfertigung möglich ist und damit die Herstellkosten soweit gesenkt werden können, daß ein breiter kommerzieller Einsatz der Lager ermöglicht wird.

Die Erfindung wird anhand von vorteilhaften Ausführungsbeispielen beschrieben.

Es zeigen
- Figur 1: ein aerostatisches Lager, dessen Lagerfläche durch Walzen verdichtet wurde,
- Figur 2: ein aerostatisches Lager, dessen Lagerfläche durch Galvanisieren beschichtet wurde,
- Figur 3: ein aerostatisches Lager, bei dem die Lagerfläche von einer Metallfolie gebildet wird,und
- Figur 4: ein aerodynamisches Lager, bei dem die Lagerfläche aus einer Schicht aus feinerem Sintermaterial gebildet wird.

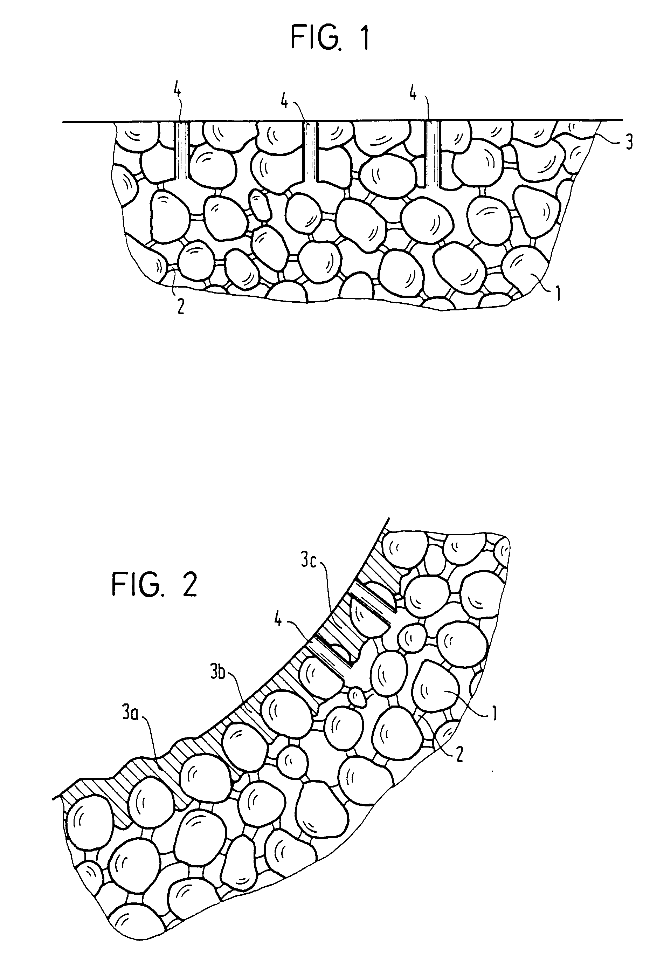

In Figur 1 ist ein Ausschnitt eines ebenen aerostatischen Lagers dargestellt, bei dem die Lagerfläche 3 durch Walzen gerade so weit verdichtet wurde, daß die Löcher, welche die Mikrodüsen 4 bilden, durch anschließendes Bohren mit einem Laserstrahl in die Lagerfläche 3 eingebracht werden können. Die Lagerfläche 3 besteht aus einem porösen Sintermaterial, in dem die Mikrodüsen 4 flächig verteilt eingebracht sind. Durch das Walzen der Lagerfläche 3 des porösen Sintermaterials wird dessen Oberfläche auf einen hohen Strömungswiderstand verdichtet. Die Tiefe der Mikrodüsen 4 ist im Beispiel so gewählt, daß die Mikrodüsen 4 in das nicht bzw. nur gering verdichtete Sintermaterial reichen. Das Sintermaterial besteht in bekannter Weise aus Sinterkugeln 1 und Verbindungsstegen 2.

In Figur 2 ist ein Ausschnitt aus einem sphärischen aerostatischen Lager dargestellt, dessen Lagerfläche 3 durch Galvanisieren beschichtet wurde. Auch hier besteht der Grundkörper des Lagers aus einem porösen Sintermaterial mit Sinterkugeln 1 und Verbindungsstegen 2. Der Bereich 3a der Lagerfläche 3 ist im unbearbeiteten Zustand dargestellt. Der Bereich 3b zeigt die Lagerfläche 3 nach einer spanenden Bearbeitung, wodurch die Deckschicht auf die erforderliche Form- und Oberflächentoleranz gebracht wurde. Mit dem Bezugszeichen 3c ist ein weiterer Bereich der Lagerfläche 3 dargestellt, bei dem die Mikrodüsen 4 eingebracht sind. Das Einbringen der Mikrodüsen 4 erfolgt mit dem Laserstrahl.

Das Beschichten der Lagerfläche 3 kann auch durch Metallspritzen oder Lasersintern erfolgen.

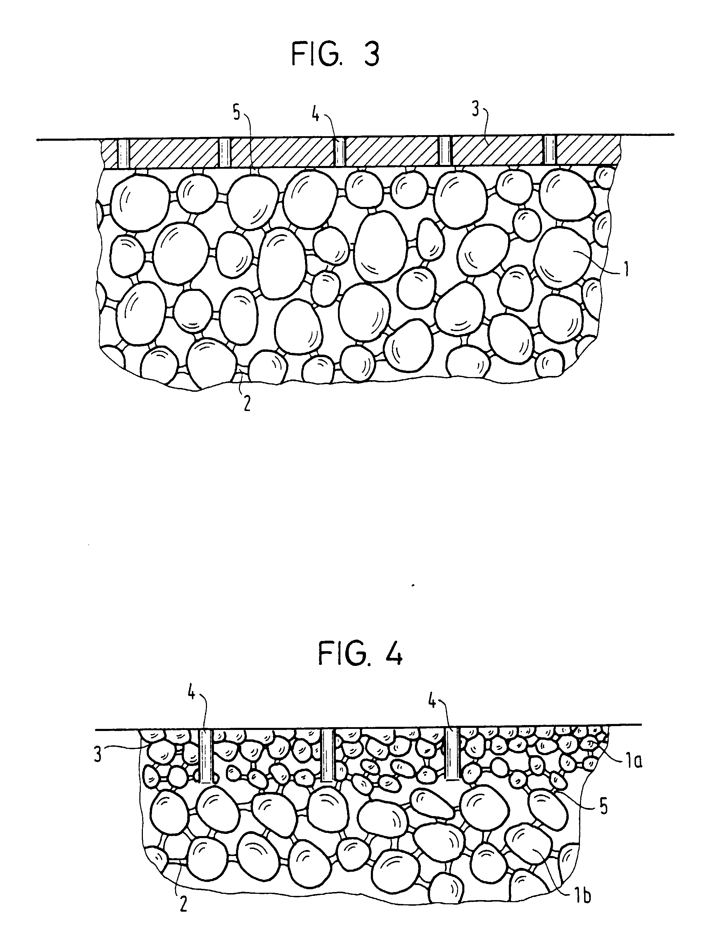

Das weitere Ausführungsbeispiel gemäß Figur 3 zeigt einen Ausschnitt aus einem ebenen aerostatischen Lager, bei dem die Lageroberfläche 3 von einer Metallfolie gebildet wird. Der Lagerkörper besteht - wie bei den vorhergehenden Beispielen - aus einem Sintermaterial 1, 2. Beim Sintern dieses Lagerkörpers wird die Metallfolie 3 in die Sinterform eingebracht, die sich beim Sintern mit dem Sintermaterial über Verbindungsstege 5 verbindet und somit die beschichtete Lagerfläche 3 bildet. In diese Metallfolie 3 werden die Mikrodüsen 4 mittels eines Laserstrahls eingebracht.

Figur 4 zeigt einen Ausschnitt aus einem ebenen aerostatischen Lager, bei dem die Lagerfläche 3 aus einer Schicht feineren Sintermaterials la gebildet wird. Diese ist über Verbindungsstege 5 mit dem Grundkörper verbunden. Der Grundkörper des Lagers besteht aus einem gröberen Sintermaterial mit Sinterkugeln 1b und Verbindungsstegen 2. Bei ausreichender Drosselwirkung der Schicht aus dem feineren Sintermaterial la kann der Verdichtungsvorgang wahlweise entfallen. In diese Schicht werden die Mikrodüsen 4 mittels eines Laserstrahls eingebracht.

Bei allen Ausführungsbeispielen kann die Lagerfläche 3 eben, sphärisch oder beliebig gekrümmt sein. Zur Einbringung der Löcher 4 wird ein Laserstrahl verwendet.

Weiterhin wird die verdichtete und/oder beschichtete Lagerfläche 3 vor dem Einbringen der Mikrodüsen 4 auf die für das Lager benötigte Formtoleranz und nach dem Einbringen der Mikrodüsen 4 auf die für das Lager benötigte Oberflächengenauigkeit bearbeitet.

Besonders vorteilhaft ist es weiterhin, daß der Laserstrahl gepulst betrieben wird und während des Einbringens des Loches 4 ein Luftstrahl oder ein ähnliches Spülgas auf das Loch 4 gerichtet wird oder durch Absaugen das Entstehen eines Grates am Rand des Loches 4 vermieden wird.

## Patentansprüche

1. Verfahren zum Herstellen von Mikrodüsen eines aerostatischen Lagers, bei dem in eine verdichtete und/oder beschichtete Lagerfläche eines porösen Sintermaterials mehrere flächig verteilt angeordnete Löcher mittels eines Laserstrahls eingebracht werden, dadurch gekennzeichnet, daß die Lagerfläche (3) vor dem Einbringen der Löcher (4) auf die für das Lager benötigte Formtoleranz bearbeitet wird, und daß die Lagerfläche (3) nach dem Einbringen der Löcher (4) auf die für das Lager benötigte Oberflächengenauigkeit bearbeitet wird.

2. Verfahren nach Anspruch 1, dadurch gekennzeichnet, daß der Laserstrahl gepulst betrieben wird.

3. Verfahren nach Anspruch 1 oder 2, dadurch gekennzeichnet, daß die Löcher (4) in ein Sintermaterial (1, 2) eingebracht werden, dessen Oberfläche zuvor durch Walzen auf einen hohen Strömungswiderstand verdichtet wird.

4. Verfahren nach Anspruch 1 oder 2, dadurch gekennzeichnet, daß das Beschichten der Lagerfläche (3) durch Galvanisieren, Metallspritzen oder Lasersintern erfolgt.

5. Verfahren nach Anspruch 1 oder 2, dadurch gekennzeichnet, daß der Lagerkörper durch Sintern hergestellt ist, wobei in die Sinterform eine Metallfolie eingebracht ist, die sich mit dem Sintermaterial verbindet und somit die beschichtete Lagerfläche (3) bildet.

6. Verfahren nach einem der Ansprüche 4 oder 5, dadurch gekennzeichnet, daß die durch das Beschichten entstehende Deckschicht durch anschließende spanende Bearbeitung auf die erforderliche Form- und Oberflächentoleranz gebracht wird.

7. Verfahren nach einem der vorhergehenden Ansprüche, dadurch gekennzeichnet, daß der Lagerkörper durch Sintern hergestellt wird, wobei in die Sinterform als Lageroberfläche eine Schicht aus feinerem Sintermaterial eingebracht wird.

## Claims

1. A method of manufacturing micro-nozzles of an aerostatic bearing, in which two-dimensionally distributed holes are formed in a compacted and/or coated bearing surface of a porous sintered material by means of a laser beam, characterized in that the bearing surface (3) is machined to the shape tolerances needed for the bearing before the formation of the holes (4) and in that the bearing surface (3) is machined to the surface precision needed for the bearing after the formation of the holes (4).

2. A method according to claim 1, characterized in that the laser beam is operated in pulsed mode.

3. A method according to claim 1 or 2, characterized in that the holes (4) are formed in a sintered material (1, 2) whose surface has previously been compacted to a high flow resistance by rolling.

4. A method according to claim 1 or 2, characterized in that the coating of the bearing surface (3) is effected by galvanising, metal spraying or laser sintering.

5. A method according to claim 1 or 2, characterized in that the bearing body is made by sintering, wherein a metal foil is placed in the sintering mould and bonds to the sintered material and thus forms the coated bearing surface (3).

6. A method according to claim 4 or 5, characterized in that the top layer formed by the coating is brought to the necessary shape and surface tolerances by subsequent metal removing machining.

7. A method according to any of the preceding claims, characterized in that the bearing body is made by sintering, wherein a layer of finer sinter material is placed in the sintering mould as the bearing surface.

## Revendications

1. Procédé de fabrication de microbuses pour un palier aérostatique, dans lequel plusieurs trous répartis dans la surface, densifiée et/ou revêtue, d'un matériau fritté poreux sont usinés au moyen d'un rayon laser, caractérisé par le fait qu'avant de réaliser les trous (4) on usine la surface de palier (3) à la tolérance de forme exigée pour le palier et après avoir réalisé les trous (4) on usine la surface de palier à la précision de surface exigée pour le palier.

2. Procédé selon la revendication 1, caractérisé que l'on utilise le rayon laser en mode pulsé.

3. Procédé selon la revendication 1 ou 2, caractérisé par le fait l'on réalise les trous (4) dans un matériau fritté dont la surface a été préalablement densifiée par cylindrage, en vue d'obtenir une résistance hydraulique élevée.

4. Procédé selon la revendication 1 ou 2, caractérisé par le fait l'on réalise le revêtement de la surface de plaier (3) par galvanisation, par métallisation par projection ou par frittage au laser.

5. Procédé selon la revendication 1 ou 2, caractérisé par le fait l'on réalise le corps de palier par frittage, un film métallique qui se lie au matériau fritté et forme ainsi la surface de palier (3) revêtue étant placé dans le moule de frittage.

6. Procédé selon l'une des revendications 4 ou 5, caractérisé par le fait l'on amène la couche de couverture obtenue par frittage à la tolérance de forme et de surface exigée, par un usinage consécutif par enlèvement de copeaux.

7. Procédé selon l'une des revendications précédentes, caractérisé par le fait l'on fabrique le corps de palier par frittage, une couche de matériau à fritter plus fin étant appliquée dans le moule de frittage pour former la surface de palier.
